# EUROPEAN PATENT APPLICATION

(11) **EP 4 729 448 A1**
(43) Date of publication of application: **22.04.2026**
(21) Application number: 25209132.7
(22) Date of filing: 16.10.2025
(51) Int. Cl.: B65G 54/02, B65B 43/46, B65B 43/54

(54) **PLANT WITH PRODUCT TRANSPORT STATION**

(30) Priority: 21.10.2024 IT 202400023373
(71) Applicant: G.D S.p.A., 40133 Bologna (BO) (IT)
(72) Inventor: VIGNALI, Matteo, 40133 Bologna (IT); GUARESCHI, Paolo, 40133 Bologna (IT); BIONDI, Andrea, 40133 Bologna (IT)
(74) Representative: Gamba, Alessandro

(57) **Abstract**

The invention relates to a plant (1) for supplying and/or filling a product (P), preferably a bag, comprising a product transport station (2) extending with respect to a longitudinal axis (X-X), a vertical axis (V-V), and a transverse axis (Y-Y).

The product transport station (2) comprises a product movement system (3) and at least one carriage (4).

The product movement system (3) comprises at least one main track (30), extending longitudinally in a straight line, with transverse track surfaces (300) comprising a longitudinal track slot (340), and a control device (31) suitable for producing localized magnetic fields.

The carriage (4) comprises sliding means (40) comprising at least one base body (401) comprising a track housing (4011) in which the main track (30) is housed, and a plurality of sliding balls (405) for sliding in respective longitudinal track slots (340).

The carriage (4) comprises a control plate (41) engaged with the base body (401), positioned transversely spaced apart facing the control device (31), comprising a magnetically sensitive element (410) stressable and movable by a magnetic field produced by the control device (31).

Furthermore, the carriage (4) comprises at least one transport device (45), engaged with the base body (401) and/or the control plate (41), suitable for supporting a product (P) during transport.

## Description

The present invention relates to a plant.

In particular, said plant is suitable for supplying and/or filling a product.

Specifically, the technical field to which the present invention pertains is that of the industry of packaging, transport, and filling of products in the food sector. Alternatively, the technical field to which the present invention pertains is that of the industry of packaging and filling of products in the pharmaceutical sector.

In particular, in the present disclosure, the term "products" generally refers to containers having a soft shape or a rigid shape or a semi-soft (or semirigid) shape, suitable for containing a product, a food, or a drug. Preferably, said food or drug is fluid or bulk.

According to a preferred embodiment of the plant, the "product" is a bag.

Known plants are suitable for operating and handling large quantities of products at high speeds, even in the order of hundreds of products per minute.

In particular, the plants comprise specific transport systems suitable for moving the products; it is also known that during said movements, by means of further specific systems included in the plant, specific operations are carried out on the products, for example filling operations.

In this technical field, it is therefore required to have plants in which high speeds of product movements are achieved, together with high precision in the execution of said movements, as well as high precision in the positioning and/or stationing of the products. In particular, by "precision" it is meant the execution of operations in which desired geodetic positionings are performed and/or in which positionings and movements are executed according to desired timings.

In the prior art, there are known plant solutions in which a compromise between the aforementioned requirements has been sought, for example by sacrificing speed for precision.

The purpose of the present invention is to propose a plant that meets all the needs of the technical field, effectively solving all the aforementioned problems. In other words, the purpose of the present invention is to provide a plant in which the products are transported both efficiently and effectively, thus achieving high speeds and high precision.

This purpose is achieved by a plant according to claim 1. The dependent claims seek protection for further features and provide additional technical advantages.

That is to say, the purpose of the present invention is achieved by a plant for supplying and/or filling a product, preferably a bag.

Preferably, the plant comprises a product transport station extending with respect to a longitudinal axis, a vertical axis, and a transverse axis.

Preferably, the plant comprises a product movement system.

Preferably, the product movement system comprises at least one main track, extending longitudinally rectilinearly.

Preferably, the main track has a substantially rectangular section.

Preferably, the main track comprises transverse track surfaces, preferably vertically spaced apart.

Preferably, each transverse track surface comprises a longitudinal track slot.

Preferably, the movement system comprises a control device, which preferably extends longitudinally, being suitable for producing localized magnetic fields.

Preferably, the product transport station comprises at least one carriage.

Preferably, each carriage comprises sliding means.

Preferably, the sliding means comprise at least one base body and a plurality of sliding balls.

Preferably, said base body comprises a track housing in which the main track is housed, and the sliding balls are housed in the base body and suitable for sliding in respective longitudinal track slots.

Preferably, each carriage comprises a control plate engaged with the base body.

Preferably, the control plate is positioned transversely spaced apart facing the control device.

Preferably, the control plate comprises a magnetically sensitive element, stressable and movable by a magnetic field produced by the control device.

Preferably, each carriage comprises at least one transport device suitable for supporting a product.

Preferably, said transport device is engaged with the base body and/or with the control plate.

In addition, further characteristics and advantages of the invention will appear from the description given below of preferred embodiments thereof, provided by way of non-limiting example, with reference to the attached figures, in which:

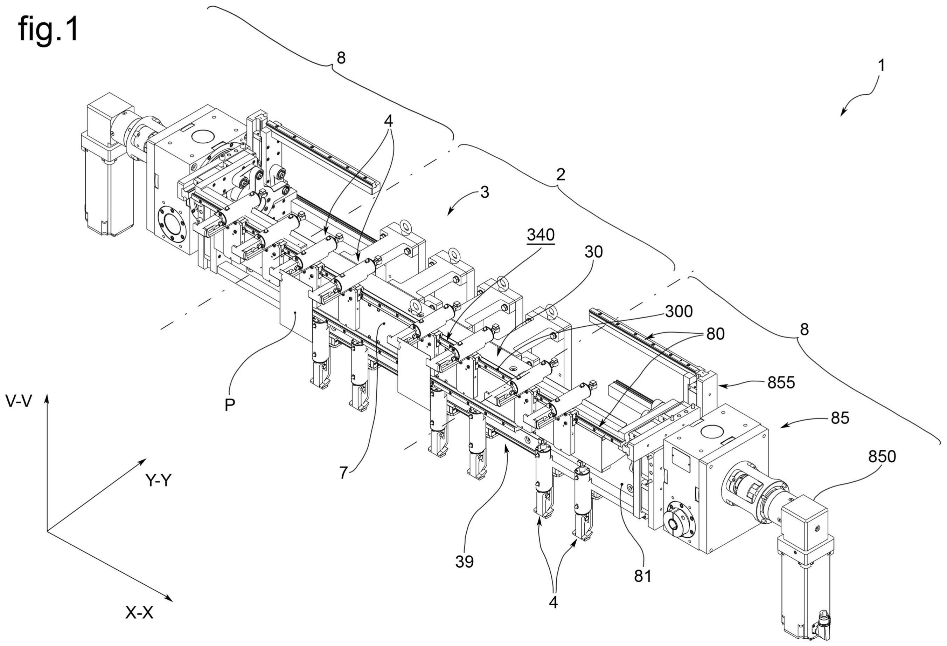

- figure 1 shows a perspective view of a plant according to the present invention, in accordance with a first embodiment, in a first operating configuration;

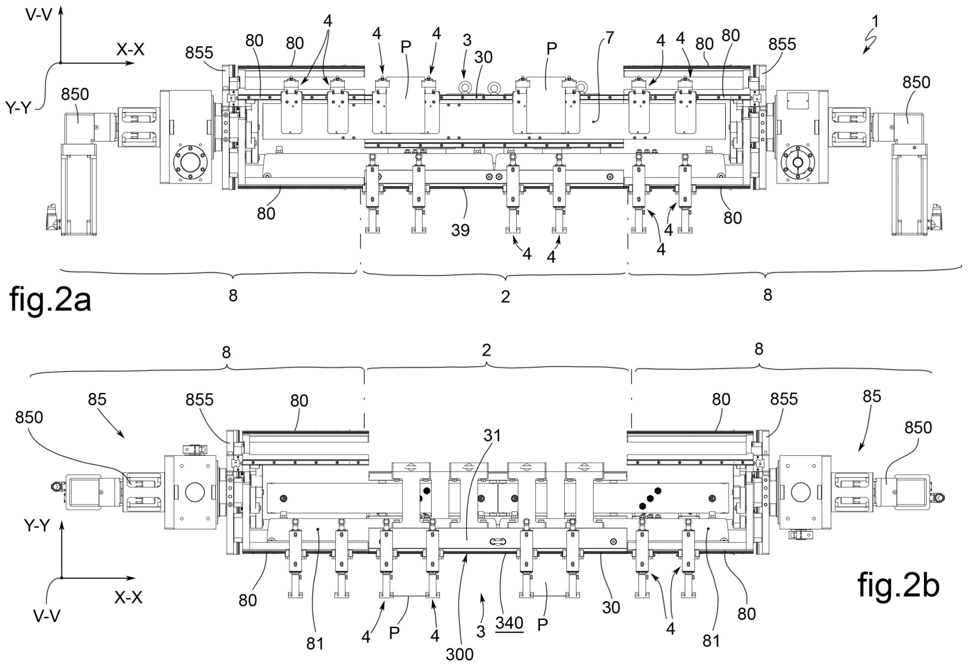

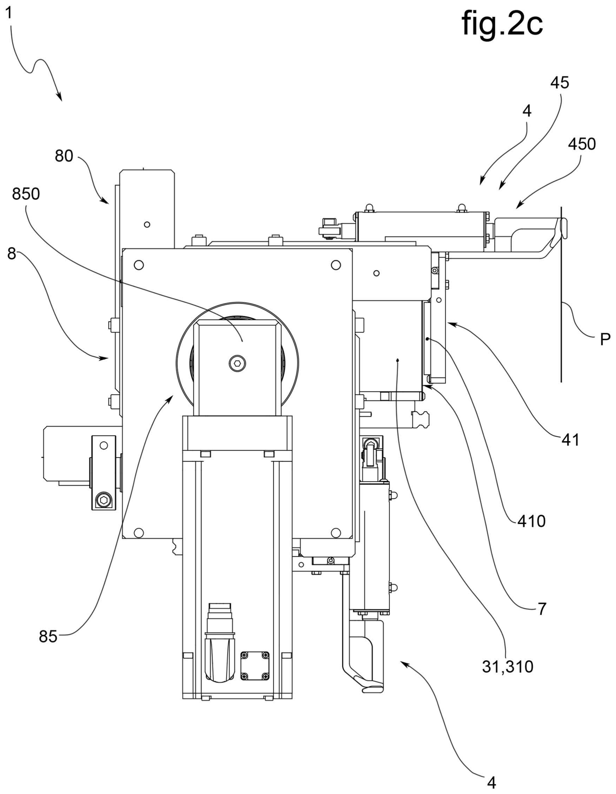

- figures 2a, 2b and 2c are respectively a front view, a top view and a side view of the plant of figure 1;

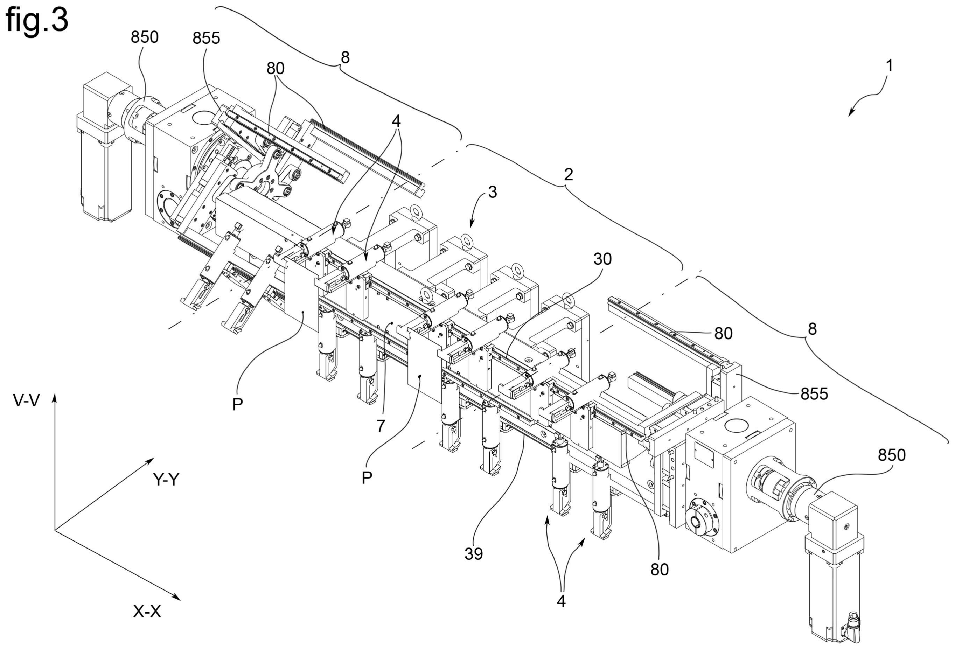

- figure 3 shows a perspective view of a plant according to the present invention, in accordance with a first embodiment, in a further operating configuration;

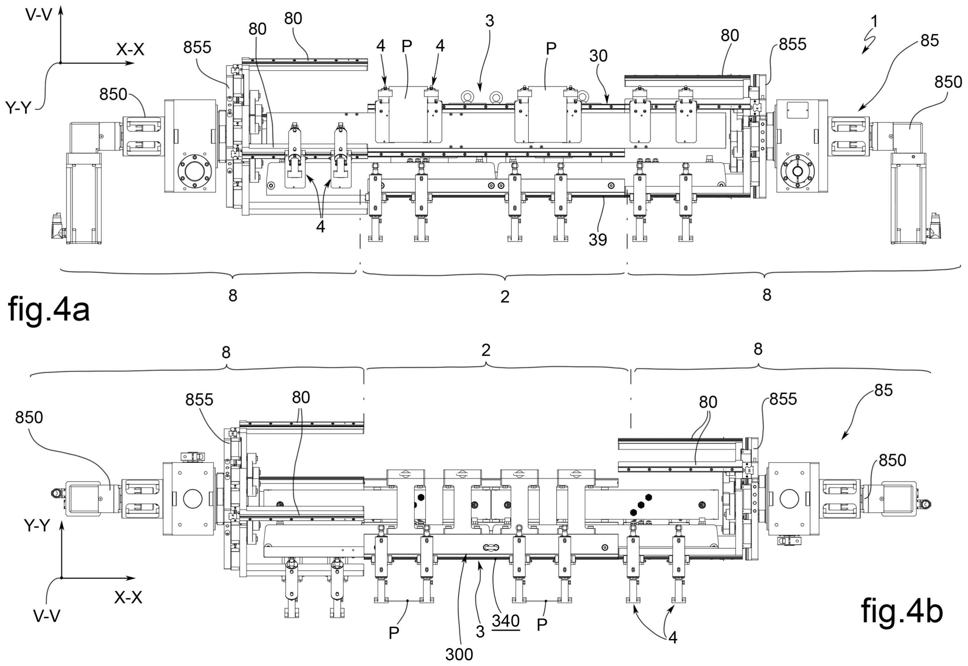

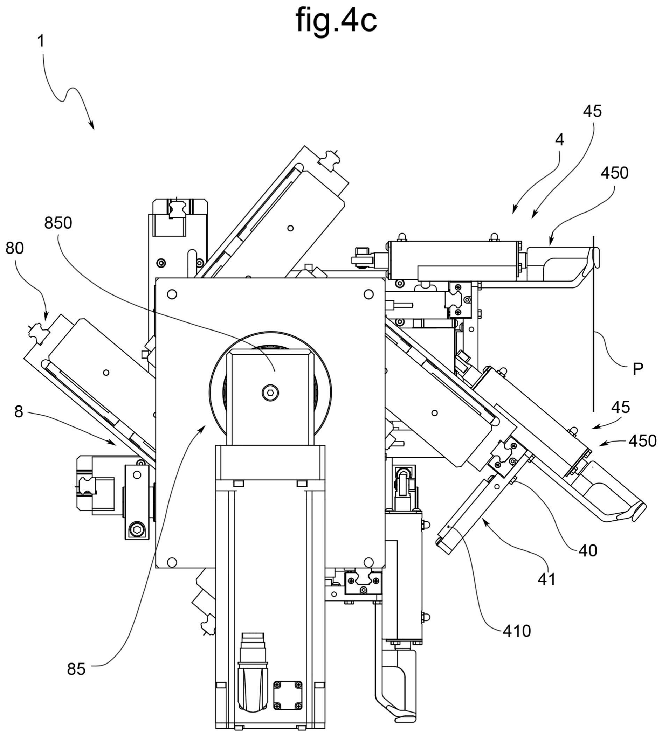

- Figures 4a, 4b and 4c are respectively a front view, a top view and a side view of the plant of figure 3;

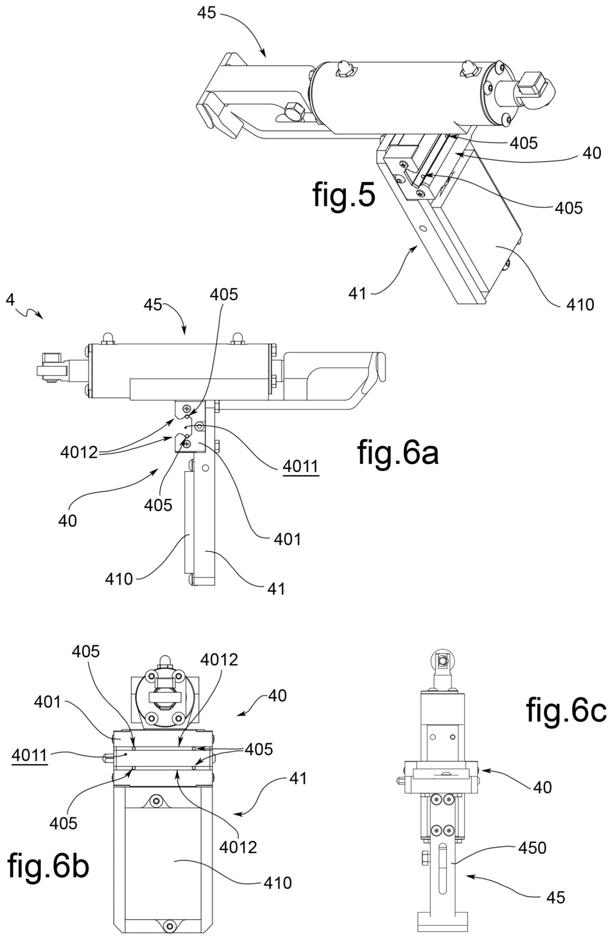

- Figure 5is a perspective view of a carriage included in the plant of figure 1;
- Figures 6a, 6b and 6c are respectively a side view, a rear view and a top view of the carriage of figure 5;

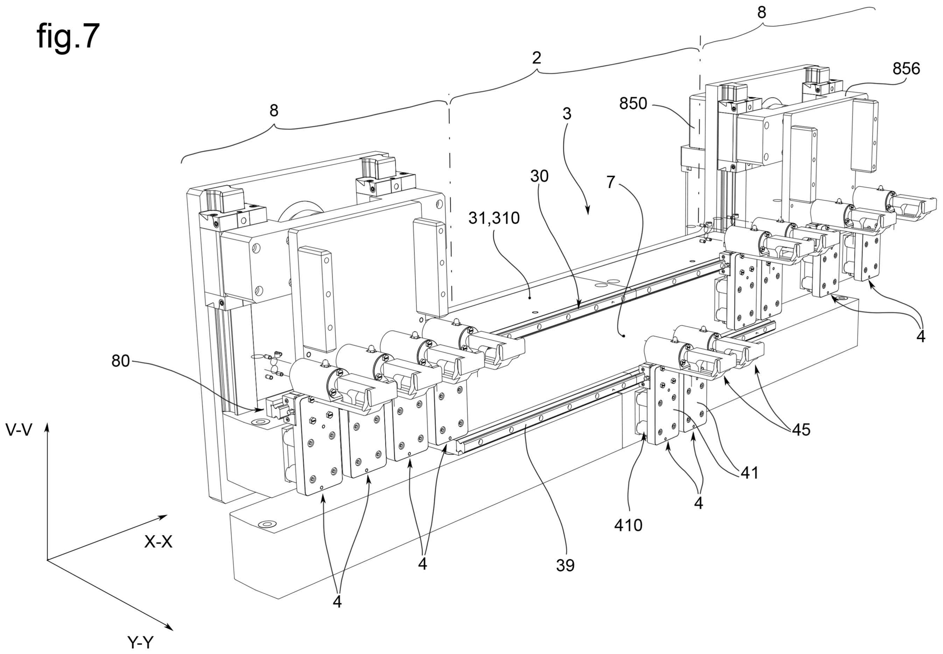

- Figure 7 shows a perspective view of a plant according to the present invention, in accordance with a second embodiment, in a first operating configuration;

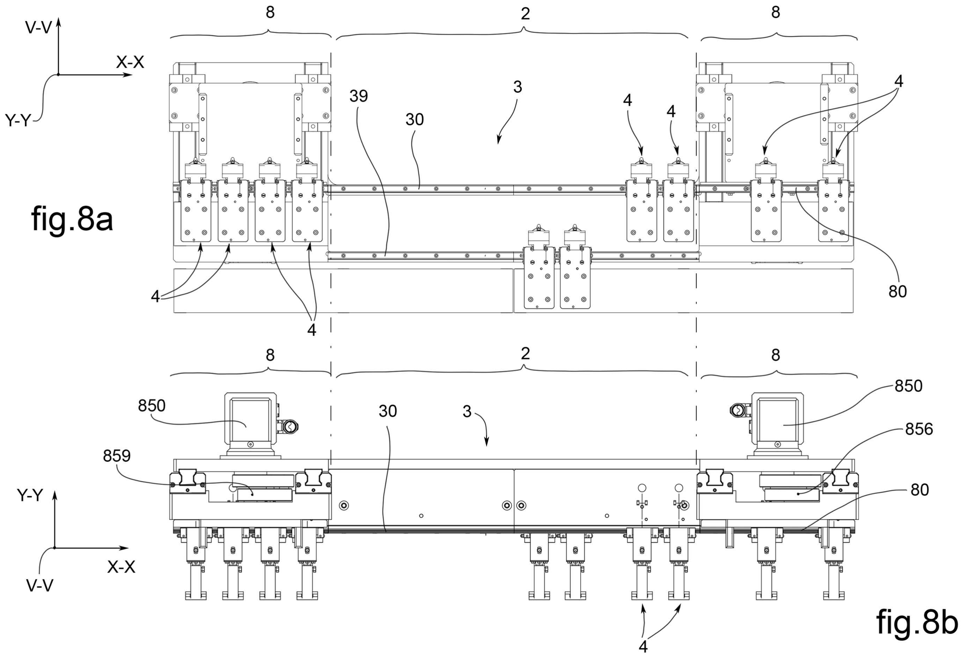

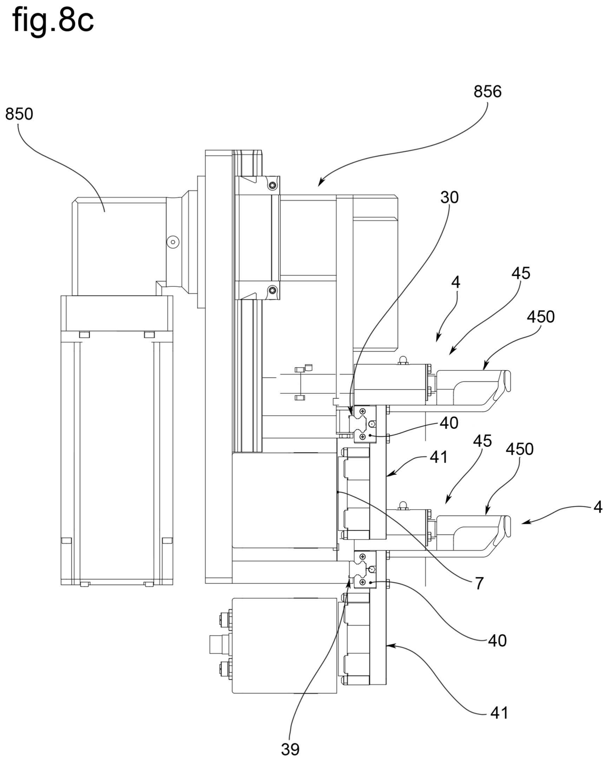

- Figures 8a, 8b and 8c are respectively a front view, a top view and a side view of the plant of figure 7;

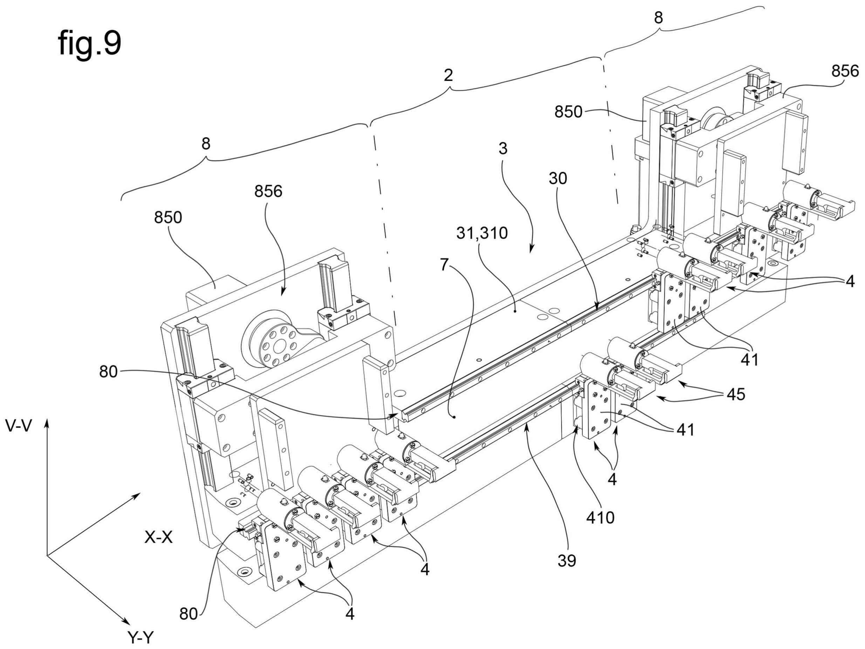

- Figure 9 shows a perspective view of a plant according to the present invention, in accordance with a second embodiment, in a further operating configuration;

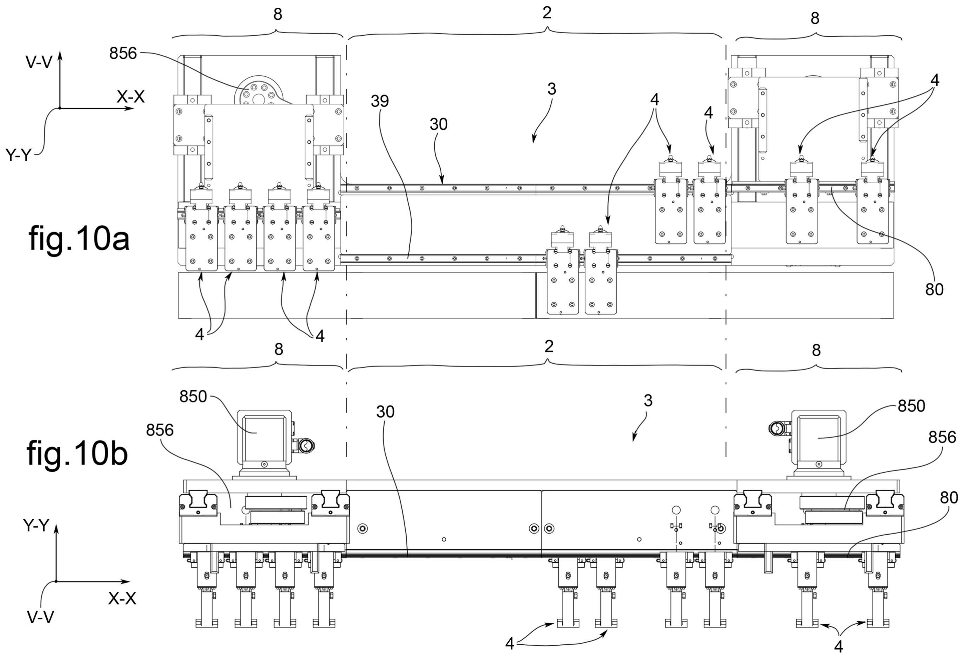

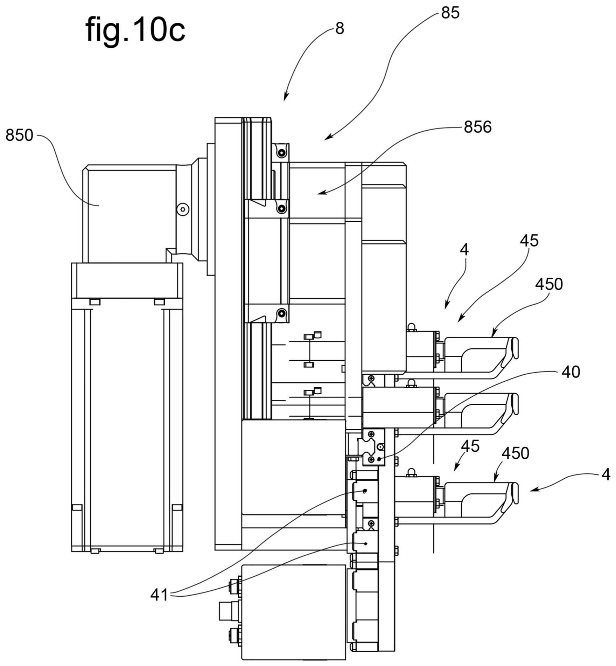

- Figures 10a, 10b and 10c are respectively a front view, a top view and a side view of the plant of figure 9;

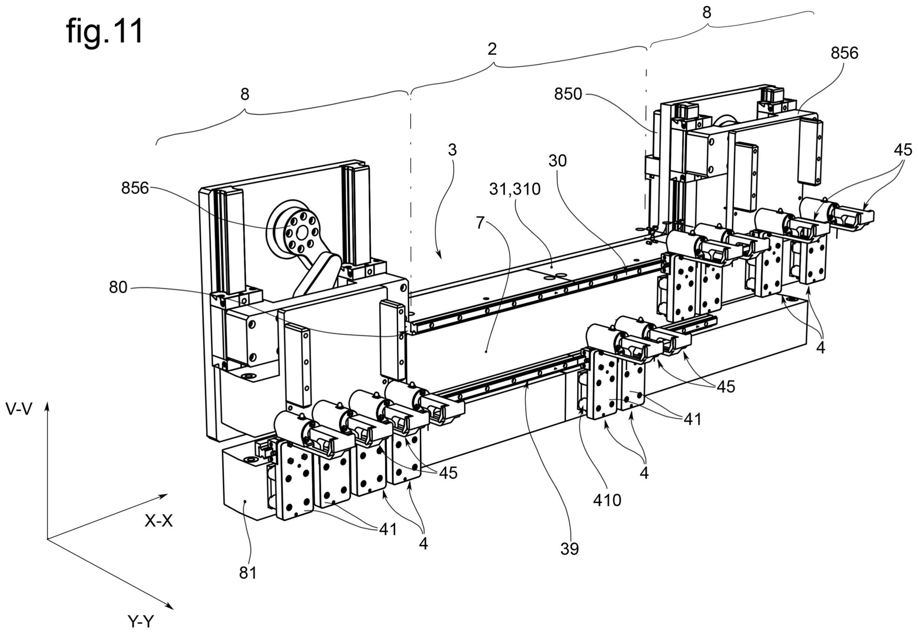

- Figure 11 shows a perspective view of a plant according to the present invention, in accordance with a second embodiment, in yet another operating configuration;

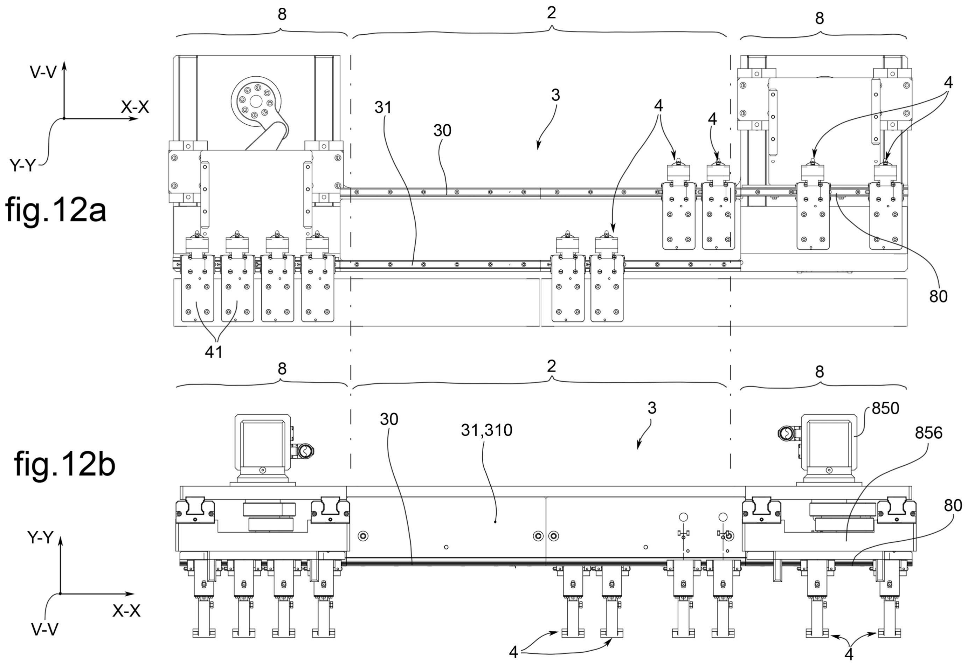

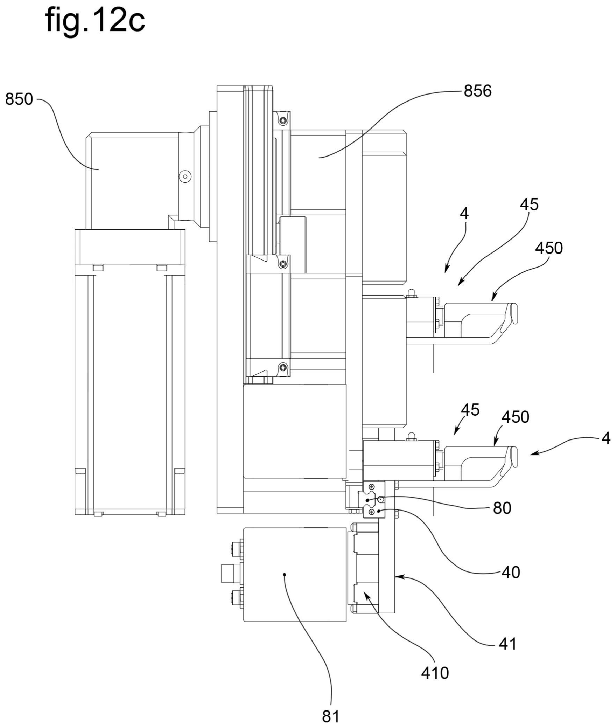

- Figures 12a, 12b and 12c are respectively a front view, a top view and a side view of the plant of figure 11.

With reference to the attached figures, reference numeral 1 denotes a plant according to the present invention.

According to a preferred embodiment, the plant 1 is suitable for supplying and/or filling a product P. Preferably, said product P is a bag. The dimensions or measurements of the product P do not limit the present invention. On the contrary, the plant 1 of the present invention is suitable for adapting in an extremely versatile manner to requirements, being suitable for operating with products of different sizes.

In accordance with the present invention, the plant 1 comprises a product transport station 2. As described in detail below, said product transport station 2 is suitable for moving the products P.

Said product transport station 2 extends with respect to a longitudinal axis X-X, a vertical axis V-V, and a transverse axis Y-Y. Preferably, the longitudinal axis X-X and the transverse axis Y-Y lie, orthogonal to each other, on a plane substantially parallel to a horizontal plane, for example the ground plane. Preferably, the vertical axis V-V is orthogonal both to the longitudinal axis X-X and to the transverse axis Y-Y.

Preferably, facing the product transport station 2, the plant 1 is suitable for comprising operating stations adapted to perform specific operations on the products P being transported on the product transport station 2; for example, the plant 1 comprises a filling station.

The presence or type of said operating stations is not limiting for the purposes of the present invention.

In accordance with the present invention, the product transport station 2 extends longitudinally as required, that is, depending on the possible operations to be performed on the products.

In accordance with the present invention, the product transport station 2 comprises a product movement system 3 and at least one carriage 4, preferably a plurality of carriages 4, suitable for supporting a product P during transport and for being moved on said product movement system 3.

Preferably, the components described as belonging to the product movement system 3 are positioned in a fixed relative position, and the carriages 4 are moved on said product movement system 3.

The product movement system 3 comprises at least one main track 30.

Preferably, the product movement system 3 comprises two main tracks 30 mutually spaced apart.

In accordance with a preferred embodiment, the main track 30, preferably each main track 30, extends longitudinally in a straight line.

In other words, the main track 30 extends along a straight line parallel to the longitudinal axis X-X.

Said main track 30 has a substantially rectangular section comprising transverse main track surfaces 300, vertically spaced apart.

Each transverse main track surface 300 comprises a longitudinal track slot 340.

In accordance with the invention, the product movement system 3 comprises a control device 31 suitable for controlling the movement of the carriages 4.

In particular, the control device 31 extends longitudinally, that is, parallel to the main track 30.

In particular, the control device 31 is suitable for producing localized magnetic fields. That is to say, the control device 31 is suitable for producing localized magnetic fields along the longitudinal axis X-X. As will be described in detail below, the presence or absence of said magnetic fields will cause the longitudinal movement of the carriages 4.

According to a preferred embodiment, the control device 31 comprises a plurality of control members 310 mutually aligned longitudinally.

Preferably, each control member 310 is suitable for producing a respective magnetic field.

Preferably, indeed, the control device 31 comprises a control unit suitable for controlling the switching on and/or off of each control member 310 so as to create the respective magnetic fields.

In accordance with a preferred embodiment, the control device 31 is suitable for moving the carriages 4 in the longitudinal direction, as required, that is, depending on the operations of the operating station, both in a main direction and in an opposite direction.

In accordance with the present invention, in fact, each carriage 4 comprises sliding means 40 suitable for slidingly engaging a main track 30. In the embodiment with a double main track 30, the sliding means 40 are suitable for slidingly engaging both main tracks 30.

In particular, said sliding means 40 comprise a base body 401 comprising a track housing 4011 in which the main track 30 is housed. In the embodiment with a double main track 30, the sliding means 40 comprise two base bodies 401.

Furthermore, the sliding means 40 comprise rolling elements suitable for sliding on the main track 30.

Preferably, the sliding means 40 comprise a plurality of sliding balls 405 housed in the base body 401, suitable for sliding on the main track 30.

Preferably, said sliding balls 405 are suitable for sliding in respective longitudinal track slots 340.

According to a preferred embodiment, the sliding means 40 comprise a plurality of pairs of sliding balls 405 longitudinally spaced apart; preferably, each sliding ball 405 of a pair is slidingly housed in the longitudinal track slot 340.

In accordance with a preferred embodiment, the track housing 4011 comprises transverse body surfaces 4012 facing the transverse main track surfaces 300, and said sliding balls 405 are housed in the base body 401, protruding from the transverse body surfaces 4012 so as to be slidingly housed in the longitudinal track slots 340.

Preferably, therefore, the track housing 4011 has a substantially complementary section to the shape of the main track 30.

According to a preferred embodiment, the base body 401 is coupled to the main track 30 in such a way that it is only disengageable longitudinally. That is to say, the base body 401 is coupled to the main track 30 in such a way that it is not disengageable transversely. In accordance with a preferred embodiment, the presence of the sliding balls 405 at least partially housed in the longitudinal track slots 340 is such as to retain the base body 401, and therefore the carriage 4, on the main track 30.

Furthermore, according to the present invention, each carriage 4 comprises a control plate 41 positioned transversely spaced apart facing the control device 31. Said control plate 41 comprises a magnetically sensitive element 410 stressable and movable by a magnetic field produced by the control device 31.

Preferably, the control plate 41 is engaged with the base body 401.

Preferably, in the embodiment with a double main track 30 and therefore with two base bodies 401, the control plate 41 is engaged with both base bodies 401.

Preferably, the magnetically sensitive element 410 is a passive element, suitable for being stressed by a magnetic field.

Preferably, the magnetically sensitive element 410 is an element made of ferromagnetic material.

According to a preferred embodiment, each carriage 4 furthermore comprises at least one transport device 45 suitable for supporting a product P during transport.

In accordance with a preferred embodiment, the transport device 45 comprises at least one transport member 450 configured to act on the product P.

Preferably, the transport member 450 is a gripper group suitable for holding or gripping the product P, preferably a bag.

In further variants of embodiment, the transport member 450 is a transport tray.

According to a preferred embodiment, the transport device 45 comprises two transport members 450 suitable for acting on two longitudinally spaced regions of the same product P. For example, according to a preferred embodiment, the two transport members 450 are two gripper groups suitable for gripping the product P, preferably a bag, in two longitudinally spaced regions.

In accordance with a preferred embodiment, the transport device 45 is engaged with the base body 401.

In accordance with a preferred embodiment, the transport device 45 is engaged with the control plate 41.

In accordance with a preferred embodiment, the transport device 45 is engaged with the base body 401 and with the control plate 41.

In accordance with a preferred embodiment, each product movement system 3 comprises at least two carriages 4 movable independently of each other.

In accordance with a preferred embodiment, the product transport station 2 further comprises a protective shield 7 positioned facing the control device 31, in such a way as to be between the control plate 41 of a carriage 4 and said control device 31.

In accordance with a preferred embodiment, the protective shield 7 is therefore positioned in the gap between the control members 310 and the magnetically sensitive element 410.

Preferably, the protective shield 7 is therefore suitable for protecting the control device 31, and consequently the potential electronic components inside it, from dirt, for example from food, and/or from impacts.

In accordance with a preferred embodiment, the protective shield 7 is also suitable for providing a sliding support surface for the carriage 4.

According to a preferred embodiment, said protective shield 7 is made of a non-magnetic and non-toxic material.

Preferably, the protective shield 7 is made of a polymer material.

According to a preferred embodiment, the protective shield 7 has a thickness between 0.1 and 2 millimeters, preferably from 0.1 to 1 millimeter, and even more preferably from 0.1 to 0.5 millimeter.

In accordance with a preferred embodiment, the product movement system 3 comprises at least one auxiliary track 39 positioned spaced apart from the main track 30.

According to a preferred embodiment, the auxiliary track 39 is positioned vertically spaced apart from the main track 30.

According to a preferred embodiment, the auxiliary track 39 is positioned transversely spaced apart from the main track 30.

According to a preferred embodiment, the auxiliary track 39 is positioned both vertically and transversely spaced apart from the main track 30.

According to a preferred embodiment, said auxiliary track 39 has the purpose of providing a return path for the carriage 4.

In other words, a carriage 4 is suitable for being moved along the main track 30 in a first longitudinal direction, forward, while it is suitable for being moved along the auxiliary track 39 in a second longitudinal direction, backward.

In the embodiment in which the product movement system 3 comprises two main tracks 30, the product movement system 3 also comprises two auxiliary tracks 39.

According to a preferred embodiment, the auxiliary track 39 has the same characteristics as those described above with reference to the main track 30. For example, the auxiliary track 39 also extends rectilinearly. For example, the auxiliary track 39 has the same shape as the main track 30. For example, the auxiliary track 39 also comprises longitudinal slots.

According to a preferred embodiment, the plant 1 further comprises a carriage exchange station 8 positioned at one end of the product movement system 3, suitable for taking a carriage 4 from the main track 30 to move it to the auxiliary track 39.

According to a preferred embodiment, the plant comprises a plurality of consecutive product movement systems 3, each having respective carriage exchange stations 8.

In accordance with a preferred embodiment, the plant 1 comprises a pair of carriage exchange stations 8 positioned at the respective ends of the product movement system 3, suitable for taking a carriage 4 from the main track 30 to move it to the auxiliary track 39 and vice versa, respectively.

According to a preferred embodiment, the carriage exchange station 8 comprises at least one exchange track 80 on which the carriage 4 is movable. In the embodiment with two main tracks 30, the carriage exchange station 8 comprises at least two exchange tracks 80.

According to a preferred embodiment, the exchange track 80 has the same characteristics as those described above with reference to the main track 30 (and to the auxiliary track 39). For example, the exchange track 80 also extends rectilinearly. For example, the exchange track 80 has the same shape as the main track 30. For example, the exchange track 80 also comprises longitudinal slots.

According to a preferred embodiment, the carriage exchange station 8 comprises movement means 85 suitable for moving the exchange track 80 between a position in which it is aligned with the main track 30 and a position in which it is aligned with the auxiliary track 39.

In accordance with a preferred embodiment, said movement means 85 move the exchange track 80 in rotation. Preferably, said movement means 85 move the exchange track 80 in roto-translation.

According to a preferred embodiment, the carriage exchange station 8 comprises a plurality of, at least two, exchange tracks 80, in such a way that while one exchange track 80 is aligned with the main track 30, another exchange track 80 is aligned with the auxiliary track 39.

For example, according to a preferred embodiment, the carriage exchange station 8 comprises four exchange tracks 80, and the movement means 85 are suitable for rotating by 90° to have one exchange track 80 aligned with the main track 30.

According to a preferred embodiment, the movement means 85 comprise a motor group 850, preferably electric, and a rotatable carousel 855 operatively connected to said electric motor group 850. Preferably, on said carousel 855 the respective exchange tracks 80 are housed. Preferably, said carousel 855 also moves the exchange tracks 80 in translation, for example in a radial direction.

In accordance with a preferred embodiment, said movement means 85 move the exchange track 80 in translation.

According to a preferred embodiment, the movement means 85 comprise a motor group 850, preferably electric, and a translation group 856 operatively connected to said electric motor group 850, suitable for transforming the rotary motion of the electric motor group 850 into alternating linear motion. Preferably, on said translation group 856 the respective exchange tracks 80 are housed.

In accordance with a preferred embodiment, the translation group 856 comprises a linear slide and a connecting-rod-type element suitable for moving said linear slide in alternating vertical motion.

In accordance with a preferred embodiment, the carriage exchange station 8 comprises an exchange control device 81 extending longitudinally, suitable for moving a respective carriage 4 from a main track 30 to the exchange track 80, or from the exchange track 80 to the auxiliary track 39.

According to a preferred embodiment, each exchange control device 81 is therefore suitable for moving a carriage 4 in sliding motion.

Preferably, the exchange control device 81 is in turn suitable for producing localized magnetic fields by means of which the carriages 4 are moved.

In accordance with a preferred embodiment, the control device 31 and the exchange control device 81 are the same component extending longitudinally in continuity. In accordance with a preferred embodiment, the protective shield 7 extends longitudinally in such a way as also to face the exchange control device 81.

According to a preferred embodiment, the movements along the auxiliary track 39, or the return path, are also achieved by means of a dedicated return control device suitable for producing localized magnetic fields designed to move the carriages 4.

In accordance with a preferred embodiment, the product transport station 3 and the carriage exchange stations 8 at its ends are such as to define a substantially closed path for the carriages 4: that is to say, each carriage 4 is controlled in movement in a cycle that provides for its movement in a closed loop along the main track 30, on a respective exchange track 80, on the auxiliary track 39, on a respective exchange track 80, and back again onto the main track 30.

In accordance with a preferred embodiment, the sliding balls 405 are always housed between the respective base body 401 and the longitudinal slots formed on the main track 30, the exchange track 80, and the auxiliary track 39.

It should be noted that in the attached figures, multiple possible components or groups of components of the plant are not shown. The presence of said non-illustrated components does not, in fact, limit the present invention. For example, the support base on which the plant rests on a base plane is not shown.

Innovatively, the plant fully achieves the intended purpose, overcoming the typical problems of the known art.

Advantageously, the plant is suitable for moving the carriages, and thus the products, efficiently and effectively.

Advantageously, the plant is suitable for moving the carriages both rapidly and precisely.

Advantageously, the sliding means are designed to effectively support the products on the respective track.

Advantageously, the sliding means are designed to always remain engaged with a respective track.

Advantageously, the control device is protected from dirt and/or possible impacts.

Advantageously, the plant is extremely flexible, being adaptable to different product formats.

Advantageously, the plant is compact in size.

Advantageously, the carriage exchange station is suitable for performing movements in a simple and reproducible manner over time.

Advantageously, the plant makes it possible to move products with a greater weight than in known plant solutions, without compromising speed.

It is clear that a person skilled in the art, in order to meet contingent requirements, may make modifications to the invention described above, all of which are within the scope of protection as defined by the following claims.

## Claims

1. A plant (1) for supplying and/or filling a product (P), preferably a bag, comprising a product transport station (2) extending with respect to a longitudinal axis (X-X), a vertical axis (V-V), and a transverse axis (Y-Y), comprising:
i) a product movement system (3) comprising:
- at least one main track (30), extending longitudinally rectilinearly, having a substantially rectangular section comprising transverse track surfaces (300) vertically spaced apart, wherein each transverse track surface (300) comprises a longitudinal track slot (340);
- a control device (31), extending longitudinally, being suitable for producing localized magnetic fields;
ii) at least one carriage (4) comprising:
- sliding means (40) comprising at least one base body (401) comprising a track housing (4011) in which the main track (30) is housed and a plurality of sliding balls (405) housed in the base body (401) suitable for sliding in respective longitudinal track slots (340);
- a control plate (41), engaged with the base body (401), positioned transversely spaced apart facing the control device (31), comprising a magnetically sensitive element (410) stressable and movable by a magnetic field produced by the control device (31);
- at least one transport device (45), engaged with the base body (401) and/or the control plate (41), suitable for supporting a product (P) being transported.

2. Plant (1) according to claim 1, wherein the sliding means (40) comprise a plurality of pairs of sliding balls (405) longitudinally spaced apart, wherein each sliding ball (405) of a pair is slidingly housed in the longitudinal track slot (340).

3. Plant (1) according to any one of the preceding claims, wherein the track housing (4011) comprises transverse body surfaces (4012) facing the transverse track surfaces (300), wherein the sliding balls (405) are housed in the base body (401) protruding from the transverse body surfaces (4012) to be slidingly housed in the longitudinal track slots (340).

4. Plant (1) according to any one of the preceding claims, wherein the control device (31) comprises a plurality of mutually longitudinally aligned control members (310), each suitable for producing a respective magnetic field.

5. Plant (1) according to any one of the preceding claims, wherein the product movement system (3) comprises two main tracks (30) vertically spaced apart, and the control device (31) is positioned between the two main tracks (30), wherein the sliding means of each carriage (4) comprise two base bodies (401) each slidingly engaged with a respective main track (30).

6. Plant (1) according to any one of the preceding claims, wherein the transport device (45) comprises a transport member (450) suitable for holding or grip the product (P), preferably a bag.

7. Plant (1) according to any one of the preceding claims, wherein the transport device (45) comprises two gripper members (450) suitable for gripping the product (P), preferably a bag, in two regions longitudinally spaced apart.

8. Plant (1) according to any one of the preceding claims, comprising at least two carriages (4) movable independently of each other.

9. Plant (1) according to any one of the preceding claims, wherein the product transport station (2) comprises a protective shield (7) positioned facing the control device (31), so as to be between the control plate (41) of a carriage (4) and said control device (31), wherein preferably said protective shield (7) is made of a non-magnetic, non-toxic material, preferably it is made of a polymer material.

10. Plant (1) according to any one of the preceding claims, wherein the product movement system (3) comprises at least one auxiliary track (39) positioned, preferably vertically and/or transversely, spaced apart from the main track (30), and the plant (1) further comprises a carriage exchange station (8) positioned at one end of the product movement system (3) suitable for taking a carriage (4) from the main track (30) to move it to the auxiliary track (39).

11. Plant (1) according to claim 10, comprising a pair of carriage exchange stations (8) positioned at the respective ends of the product movement system (3) suitable for taking a carriage (4) from the main track (30) to move it to the auxiliary track (39) and vice versa, respectively.

12. Plant (1) according to any one of claims 10 or 11, wherein the auxiliary track (39) has the same shape as the main track (30) so that the carriage (4), and in particular the base body (401), is slidingly engageable with both the main track (30) and the auxiliary track (39).

13. Plant (1) according to any one of claims 10 to 12, wherein the carriage exchange station (8) comprises at least one exchange track (80) on which the carriage (4) is movable and comprises movement means (85) suitable for moving the exchange track (80) between a position in which it is aligned with the main track (30) and a position in which it is aligned with the auxiliary track (39).

14. Plant (1) according to claim 13, wherein the movement means (85) rotatory or translationally move the exchange track (80).

15. Plant (1) according to claim 13 or claim 14, wherein the carriage exchange station (8) comprises a longitudinally extending exchange control device (81), being suitable for producing localized magnetic fields by means of which the carriages (4) are moved.
